(19) Europäisches Patentamt
European Patent Office
Office européen des brevets

(11) **EP 2 191 962 B1**

(12) **EUROPÄISCHE PATENTSCHRIFT**

(45) Veröffentlichungstag und Bekanntmachung des Hinweises auf die Patenterteilung:
**07.01.2015 Patentblatt 2015/02**

(51) Int Cl.:
*B32B 17/10* (2006.01)     *C03C 3/083* (2006.01)
*C03C 10/00* (2006.01)     *F41H 5/04* (2006.01)

(21) Anmeldenummer: **09175675.9**

(22) Anmeldetag: **11.11.2009**

(54) **Hochtransparentes wuchteinwirkungsfestes Scheibenlaminat umfassend wenigstens eine Scheibe einer Lithium-Alumino-Silikat-Glaskeramik und deren Verwendung**

Highly transparent impact-resistant plate laminate comprising at least one plate of lithium -alminium-silicate-glass ceramic und use thereof

Plaque stratifiée ultra-transparente résistante aux chocs comprenant au moins une plaque de silicates de lithium alminium vitrocéramique et utilisation celui-ci

(84) Benannte Vertragsstaaten:
**AT BE BG CH CY CZ DE DK EE ES FI FR GB GR HR HU IE IS IT LI LT LU LV MC MK MT NL NO PL PT RO SE SI SK SM TR**

(30) Priorität: **13.11.2008 DE 102008043718**

(43) Veröffentlichungstag der Anmeldung:
**02.06.2010 Patentblatt 2010/22**

(73) Patentinhaber: **Schott AG**
**55122 Mainz (DE)**

(72) Erfinder:
• **Siebers, Friedrich**
  **55283, Nierstein (DE)**
• **Schaupert, Kurt**
  **65719, Hofheim (DE)**
• **Zachau, Thilo**
  **64625, Bensheim (DE)**
• **Schiffner, Ulrich**
  **55126, Mainz (DE)**

(74) Vertreter: **Fuchs Patentanwälte Partnerschaft mbB**
**Patentanwälte**
**Postfach 46 60**
**65036 Wiesbaden (DE)**

(56) Entgegenhaltungen:
**EP-A- 0 233 732     EP-A- 0 390 773**
**EP-A- 1 029 830     EP-A- 1 837 312**
**WO-A-03/068501     GB-A- 2 284 655**

**Beschreibung**

Die vorliegende Erfindung beschreibt ein transparentes Scheibenlaminat, umfassend wenigstens eine Scheibe einer Lithium-Alumino-Silicat-Glaskeramik und deren Verwendung als Panzerverglasung oder schusssichere Weste.

Transparente Glaskeramiken weisen bisher eine zu starke Eigenfarbe auf. Die Eigenfarbe transparenter Glaskeramiken kann verschiedene Ursachen haben. In den Gemengerohstoffen für die Schmelzen ist das färbende Element Fe als Verunreinigung enthalten. Auch die Verwendung der Läutermittel $Sb_2O_3$ und $CeO_2$ führt zu einer geringen Eigenfarbe. Die beschriebene bräunlich-gelbe Eigenfärbung der transparenten Glaskeramiken beruht maßgeblich auf elektronischen Übergängen an Farbkomplexen, die im Bereich des sichtbaren Lichts absorbieren und an denen die für die Keimbildung notwendige Komponente, das Ti-Ion, beteiligt ist. Der häufigste absorbierende Farbkomplex ist die Ausbildung von benachbarten Fe- und Ti-Ionen, zwischen denen elektronische Charge-Transfer-Übergänge stattfinden. Sn-Ti-Komplexe bewirken ebenfalls eine Eigenfarbe. Die Fe/Ti-Farbkomplexe führen zu einer rot-braunen, die Sn/Ti-Farbkomplexe zu einer gelb-braunen Verfärbung. Die Ausbildung dieser benachbarten Farbkomplexe findet bereits beim Abkühlen des Ausgangsglases und insbesondere beim späteren Keramisieren der Glaskeramik statt. In der Schmelze sind die Ionen noch gleichmäßig verteilt, beim Abkühlen bei hohen Temperaturen und beim Keramisieren lagern sie sich bevorzugt aneinander an. Beim Keramisieren der transparenten Glaskeramiken verstärkt sich dadurch die Eigenfarbe gegenüber dem Ausgangsglas ganz beträchtlich. Durch Absorption im kurzwelligen Teil des sichtbaren Spektrums erhalten die transparenten Flachgläser und besonders die daraus hergestellten Glaskeramiken eine deutliche Eigenfarbe, die mit der Dicke stark zunimmt. Eine solche Glaskeramik ist zum Beispiel aus der EP 1 029 830 A1 an sich bekannt und ihre Verwendung als beheizbare Platte zum Kochen und Grillen, als Kaminscheibe und als Bodenplatte für Mikrowellenherde ist beschrieben. Die EP 1 837 312 A1 beschreibt eine Neodymoxid enthaltende Glaskeramik für die gleichen Anwendungsfelder.

Es ist bekannt, durch Überfärbung die Eigenfarbe der Glaskeramiken zu reduzieren. Das Prinzip des Überfärbens eines vorhandenen, unerwünschten Farbstichs führt naturgemäß zu stärkerer Absorption des Lichts und erniedrigt damit die Gesamtlichttransmission, da die vorhandenen Absorptionen neutralisiert werden durch Absorptionen komplementärer Lichtanteile durch das Überfärbemittel.

Glaskeramikscheiben finden unter anderem Anwendung in Panzerglasscheiben. Bei der Fertigung von Panzerglasscheiben werden eine Anzahl von verschiedenen Glas- oder Glaskeramikschichten und Kunststofffolien verbunden. Insbesondere der temperatur- und druckgesteuerte Prozess der Verbindung der einzelnen Schichten und Kunststoffe miteinander ist zeit- und kostenintensiv. Die zahlreichen Grenzflächenübergänge zwischen Glasscheiben und Kunststoffen sorgen für schlechte Transmissionseigenschaften, die sogar zu einer Interferenzmusterbildung in Form von Newton-Ringen führen können. Darüber hinaus führt der hohe Glasanteil, d. h. die hohe Anzahl Glasscheiben in bekannten Panzerglasscheiben dazu, dass diese ein sehr hohes Flächengewicht aufweisen. Das hohe Flächengewicht wiederum bedingt auch hinsichtlich der Montage und der Verglasung einen ausgeprägten, konstruktiven Aufwand.

Die WO 03/068501 A1 beschreibt eine geschosshemmende Mehrschichtverglasung aus Glas oder ballistischer Keramik, bei der die aus Beschussrichtung gesehen letzte Schicht aus chemisch gehärtetem Dünnglas mit einer Stärke von 0,7 mm und darunter besteht, wodurch die Bildung gefährlicher Splitter vermindert wird.

Die EP 0 390 773 B1 beschreibt ein Panzermaterial, das eine Schicht eines Keramikmaterials und eine Schicht eines faserverstärkten Polymermaterials enthält. Das Keramikmaterial wird durch Kristallisation aus Glaskacheln entsprechender eigentümlicher Zusammensetzung gewonnen und hat eine niedrigere Dichte als die zuvor benutzte Aluminiumoxid-Keramik.

Die GB 2 284 655 A beschreibt eine Glas-Keramik-Panzerung, bei der die Kristallgrößen in der Glaskeramik kleiner sind als die Wellenlänge des sichtbaren Lichts. Das wird durch einen hohen Gehalt an Keimbildern und gegebenenfalls $LiO_2$ erreicht. Bevorzugt wird die Glaskeramik noch chemisch gehärtet. Nähere Angaben zum Aufbau eines schusshemmenden Laminats werden nicht gemacht.

Die EP 0 233 732 A1 beschreibt die Herstellung einer besonders reinen Glaskeramik aus einem Glaspulver, das nach dem Sol-Gel-Verfahren hergestellt ist. Hinweise auf die Verwendung dieser Glaskeramik als Panzermaterial sind der Schrift nicht zu entnehmen.

Aufgabe der vorliegenden Erfindung war es, Scheibenlaminate, umfassend wenigstens eine Glaskeramikscheibe, zur Verfügung zu stellen, die eine hohe Gesamttransmission für sichtbares Licht und/oder eine hohe Härte zeigen. Insbesondere zeigen diese Scheibenlaminate eine hohe Gesamttransmission für sichtbares Licht, der Helligkeitswert Y für durchstrahlendes Normlicht A unter 2°-Beobachtung beträgt $Y_{A/2°} > 50$.

Eine weitere Aufgabe der vorliegenden Erfindung war es, Scheibenlaminate, umfassend wenigstens eine Scheibe aus Glaskeramik, zur Verfügung zu stellen, die eine bessere Beständigkeit gegenüber dynamischen Belastungen im Vergleich zu Scheibenlaminaten mit herkömmlichen Glaskeramikscheiben und gleichem Flächengewicht zeigen.

Eine weitere Aufgabe der vorliegenden Erfindung war es, Scheibenlaminate, umfassend wenigstens eine Glaskeramikscheibe, zur Verfügung zu stellen, die eine verbesserte Durchsicht aufweisen und dabei eine Beschusssicherheit gewährleisten, die den Anforderungen des NATO-Standardization-Agreement, STANAG 4569, Level 2 und 3, entsprechen. Die Scheibenlaminate gewährleisten ebenfalls eine Beschusssicherheit gegenüber Armour-Piercing-Projektilen, d. h. gegenüber panzerbrechenden Projektilen.

Die vorstehend genannten Aufgaben wurden gemäß Anspruch 1 durch das Zurverfügungstellen eines Scheibenlaminats enthaltend wenigstens eine transparente Scheibe aus Lithium-Alumino-Silicat-Glaskeramik, gegebenenfalls wenigstens eine Scheibe aus Glas und wenigstens eine Schiebe aus Polymermaterial gelöst.

Die Scheibe aus Glaskeramik enthält in Gew.-% bezogen auf die Gesamtzusammensetzung als Bestandteile enthält:

| | |
|---|---|
| $Li_2O$ | 3,0 - 4,5 |
| $Al_2O_3$ | 18,0 - 24,0 |
| $SiO_2$ | 55,0 - 70,0 |
| $TiO_2$ | 0,01 - 2,3 |
| $SnO_2$ | 0, - 0,2 |
| $ZrO_2$ | 0,01 - 2,0 |
| $\Sigma TiO_2+ZrO_2$ | 0,5 - 4,3 |
| MgO | 0 - 0,8 |
| $Fe_2O_3$ | 40 - 200 ppm und |
| $As_2O_3$ | 0,3 - 0,9 Gew.-% als chemisches Läutermittel. |

gegebenenfalls wenigstens eine Scheibe (b) ausgewählt aus der Gruppe bestehend aus Borosilikatglas, Kalk-Natron-Glas, Alumosilikatglas oder chemisch oder thermisch vorgespanntem Borosilikatglas, Alumosilikatglas oder Kalk-Natron-Glas mit einer Dicke im Bereich von 3 bis 20 mm

und wenigstens einer Scheibe (c) ausgewählt aus der Gruppe bestehend aus Scheiben aus Polycarbonat, Polyacryl, insbesondere Polymethylmethacrylat, Celluloseacetatbutyrat, Nylon, Polyolefin, Polyester, Polyurethan und Mischungen daraus mit einer Dicke im Bereich von 3 bis 15 mm.

Vorzugsweise weist die Scheibe 40 bis 130 ppm $Fe_2O_3$ auf, der $TiO_2$-Gehalt ist bevorzugt größer als 0,5 Gew.-%.

Die Verringerung des Fe-Gehaltes ist nur bis zu einem bestimmten Grad eine wirtschaftlich umsetzbare Maßnahme. Durch die großtechnisch verwendeten Gemengerohstoffe für die Herstellung des Glases und durch Abrieb aus Anlageteilen für die Herstellung, Homogenisierung und Transport des Gemenges entsteht immer ein gewisser Eintrag von Fe oder $Fe_2O_3$ in das Gemenge. Aufgrund der Kosten für hochreine Rohstoffe oder Sondermaßnahmen an technischen Anlagen ist es wirtschaftlich nicht mehr vertretbar, in großtechnisch produzierten transparenten Glaskeramiken den $Fe_2O_3$-Gehalt unter ca. 40 ppm zu verringern.

Unter einer Glaskeramik wird im Sinne der vorliegenden Erfindung ein anorganisches, nicht poröses Material mit einer kristallinen Phase und einer glasigen Phase verstanden, wobei in der Regel die Matrix, d. h. die kontinuierliche Phase, eine Glasphase ist. Die Kombination aus kristalliner Phase und Glasphase verleiht einer Glaskeramik ihre besonderen Eigenschaften.

Sichtbares Licht bezeichnet im Sinne der vorliegenden Erfindung Licht im Wellenlängenbereich zwischen 380 nm bis 780 nm.

Der Helligkeitswert Y des CIE-xyY-Farbmesssystems wird jeweils für durchstrahlendes Normlicht A unter einem Beobachtungswinkel von 2° angegeben und lässt sich aus wellenlängenaufgelösten Transmissionsspektren unter Zuhilfenahme der CIE-definierten Augenempfindlichkeitskurven $\bar{x}(\lambda)$, $\bar{y}(\lambda)$ und $\bar{z}(\lambda)$ (Tristimuluskurven) bestimmen (Comission internationale de l'Eclairage proceedings, 1931. Cambridge University Press, Cambridge bzw. DIN 5031):

$$X = \int_0^\infty I(\lambda)\bar{x}(\lambda)d\lambda$$

$$Y = \int_0^\infty I(\lambda)\bar{y}(\lambda)d(\lambda)$$

$$Z = \int\limits_{0}^{\infty} I(\lambda)\overline{z}(\lambda)d\lambda$$

$\lambda$: Wellenlänge des monochromatischen Lichtes;

$I(\lambda)$: Intensität des monochromatischen Lichtes ($I(\lambda) = \tau(\lambda) \cdot f_{A/2°}(\lambda)$ : weifenfängenaufgelöste Transmission der Probe $\tau(\lambda)$ multipliziert mit dem wellenlängenaufgelöstem Intensitätsfaktor für Normlicht A unter 2°-Beobachtung $f_{A/2°}$)

Die Frabkoordinaten lassen sich berechnen aus:

$$x = \frac{X}{X+Y+Z}$$

$$y = \frac{Y}{X+Y+Z}$$

$$z = \frac{Z}{X+Y+Z} = 1 - x - y$$

Der Unbuntpunkt für Normlicht A ist definiert durch:

$$x_{u,A} = 0{,}4476$$

$$y_{u,A} = 0{,}4074$$

Die Abkürzung CTE bezeichnet den linearen thermischen Ausdehnungskoeffizienten eines Materials, der jeweils für verschiedene Temperaturbereiche angegeben werden kann. Die Bestimmung des CTE $(\frac{\Delta l}{l_0 \Delta T})$ in ppm/K erfolgte durch dilatometrische Messungen mit einem Termal Dilatometric Analyzer Harrop Modell TD 710 entsprechend DIN ISO 7991.

Vorzugsweise weist die transparente Glaskeramikscheibe (a) als weitere Bestandteile, jeweils in Gew.-% bezogen auf die Gesamtzusammensetzung, die folgenden Elemente auf:

| | |
|---|---|
| BaO | 0 - 3 |
| Na$_2$O | 0 - 1,5 |
| ZnO | 0 - 2,5 |
| ZrO$_2$ | 0,5 - 2 |

Die Oxide Li$_2$O, Al$_2$O$_3$, und SiO$_2$ sind in den bevorzugten, in den Ansprüchen angegebenen Grenzen notwendige Bestandteile der Glaskeramik. Ein Mindestgehalt an Li$_2$O von 3 Gew.-% ist im Allgemeinen erforderlich, jedoch führen Li$_2$O-Gehalte von über 4,5-Gew.-% beim
Herstellprozess häufig zu einer ungewollten Entglasung. Ein Gehalt von 3,2 bis 4,3 Gew.-% Li$_2$O führt zu besonders guten Ergebnissen.

Zur Vermeidung zu hoher Viskositäten des Glases und zur Unterdrückung der Neigung zu unerwünschter Entglasung bei der Formgebung ist der Al$_2$O$_3$-Gehalt bei einem Mindestgehalt von 18 Gew.-% auf t maximal 24 Gew.-% begrenzt. Sofern der Anteil an Al$_2$O$_3$ weniger als 19 Gew.-% beträgt, verschlechtert sich die Transparenz der Glas-

keramik. Der $SiO_2$-Gehalt soll maximal 70 Gew.-%, insbesondere 68 Gew.-% betragen, weil diese Komponente die Viskosität des Glases stark erhöht. Somit sind für das Einschmelzen der Gläser und hinsichtlich der Temperaturbelastung bei der Formgebung höhere Gehalte von $SiO_2$ unvorteilhaft. Der Mindestgehalt an $SiO_2$ sollt 55 Gew.-%, insbesondere 60 Gew.-%, betragen.

Als weitere Komponenten können MgO und ZnO in die Kristallphasen eingebaut werden. Der ZnO-Gehalt ist wegen der Problematik der Bildung unerwünschter Kristallphasen, wie Zn-Spinell bei der Keramisierung begrenzt auf Werte von höchstens 2,5 Gew.-%, bevorzugt höchstens 2 Gew.-%. Der MgO-Gehalt ist auf maximal 0,8 Gew.-%, bevorzugt auf maximal 0,65 Gew.-% begrenzt, weil er sonst den Ausdehnungskoeffizienten der Glaskeramik unzulässigerweise erhöht. Ebenfalls ist ein geringer MgO-Gehalt vorteilhaft, um die Eigenfarbe der Glaskeramik zu unterdrücken. Ein MgO-Mindestgehalt von 0,3 Gew.-% wird in der Regel benötigt, damit die thermische Ausdehnung der Glaskeramik im Temperaturbereich von 30°C bis 700°C nicht auf negative Werte unter -0,3 x $10^6$/K fällt.

Als Keimbildner enthält die Glaskeramik $TiO_2$ und $ZrO_2$, vorzugsweise ausschließlich $TiO_2$. Auch $SnO_2$ kann als Keimbildner dienen. Die Menge $TiO_2$ liegt vorzugsweise im Bereich zwischen 1,8 und 2,3 Gew.-%. Besonders bevorzugt im Bereich zwischen 2,0 und 2,3 Gew.-%. Die Menge $ZrO_2$ liegt vorzugsweise im Bereich zwischen 0,5 und 2, besonders bevorzugt im Bereich zwischen 1,5 und 2 Gew.-%. Kommen beide Keimbildner gleichzeitig zur Anwendung, so soll die Summe von $TiO_2$ + $ZrO_2$ 4,3 Gew.-%, vorzugsweise 2,3 Gew.-% nicht überschreiten.

Die vorstehend genannten Mengen an Keimbildner erlauben die Keramisierung innerhalb kurzer Zeit, vorzugsweise innerhalb einer Periode von 1 bis 2 Stunden. Aufgrund des geringen Gehaltes an $TiO_2$ wird auch der Grad an Eigenfärbung reduziert.

ZnO und MgO, sowie BaO sind in der Zusammensetzung vorhanden, um die Schmelzeigenschaften der Glaskeramik zu verbessern und die Glasphase zu stabilisieren. ZnO ermöglicht es ebenfalls, den thermischen Ausdehnungskoeffizienten (CTE) zu beeinflussen, während MgO und BaO den entsprechenden Koeffizienten erhöhen. Ebenfalls können höhere Gehalte der vorstehend genannten Metalle das Kristallisationsverhalten bei der Umwandlung des Glases in die Glaskeramik beeinträchtigen und wirken sich ungünstig auf die Temperaturbelastbarkeit der Glaskeramik aus. Vorzugsweise enthält die Glaskeramik der vorliegenden Erfindung 1 bis 2,5 ZnO, 0,3 bis 0,8 Gew.-% MgO, und 0 bis 3 Gew.-% BaO. Besonders bevorzugt enthält die Glaskeramik der vorliegenden Erfindung 1 bis 2 ZnO, 0,3 bis 0,65 MgO und 0 bis 2 BaO, jeweils angegeben in Gew.-%.

Die Glaskeramikscheibe (a) kann ebenfalls 0 bis 1,5 Gew.-%, vorzugsweise 0 bis 1 Gew.-%, $Na_2O$ enthalten. Nach dem Keramisieren bleiben die Alkali-Ionen, wie Natriumionen in der Restglasphase. Sie erhöhen den thermischen Ausdehnungskoeffizienten und können deshalb verwendet werden, sofern der thermische Ausdehnungskoeffizient zu negative Werte zeigt. Sofern sie allerdings in zu großen Mengen verwendet werden, wird die thermische Ausdehnung zu stark und die Keimbildung ist nur schwer zu kontrollieren.

Die in den Ansprüchen 1 bis 5 beschriebenen Scheiben (a) werden unter Verwendung der für Glaskeramiken aus dem $Li_2O$-$Al_2O_3$-$SiO_2$-System üblichen Läutermittel Arsenoxid geläutert. Auch $SnO_2$ kann insbesondere in Verbindung mit einer Hochtemperaturläuterung > 1700°C alternativ oder in Kombination in Mengen von bis zu 0,2 Gew.-% zugesetzt werden. Andere Läuterzusätze, wie z. B. $Sb_2O_3$-, $CeO_2$-, Sulfatverbindungen, Chloridverbindungen, Fluoridverbindungen, können der Glasschmelze zugesetzt werden. Der Gesamtgehalt der Läutermittel und -Zusätze soll 1,2 Gew.-% nicht übersteigen. Bevorzugt wird $As_2O_3$ als einziges Läutermittel eingesetzt.

Bei niedrigen Läutermittelgehalten von $As_2O_3$, $Sb_2O_3$ oder $SnO_2$ kann es erforderlich sein, die chemische Läuterung mit einer Hochtemperaturläuterung oberhalb 1700°C zu kombinieren, falls gute Blasenqualitäten mit Blasenzahlen von unter 5 Blasen/kg Glas (bezogen auf Blasengrößen > 0,1 mm) gewünscht sind. Es ist besonders günstig, sofern die Eigenfarbe vermieden werden soll, die Glaskeramik ausschließlich mit $As_2O_3$ als Läutermittel zu läutern, und die Läutermittel Antimonoxid und Zinnoxid nicht zu verwenden. Gegebenenfalls können allerdings weitere Läuterzusätze, wie Sulfat-, Chlorid-, Fluoridverbindungen in Gesamtgehalten bis zu 1 Gew.-% zugesetzt werden.

Die Dicke der transparenten Scheibe (a) aus Glaskeramik liegt im Bereich zwischen 2 und 20 mm, bevorzugt im Bereich von 4 bis 15 mm, besonders bevorzugt im Bereich zwischen 6 und 12 mm.

Vorzugsweise zeigt die transparente Scheibe (a) bei einer Dicke von 4 mm einen Helligkeitswert $Y_{A/2°} \geq 80$, besonders bevorzugt $\geq 85$, ganz besonders bevorzugt $\geq 89$.

Bevorzugt liegt der thermische Ausdehnungskoeffizient (CTE) der Scheibe (a) zwischen 30 bis 700°C, im Bereich zwischen -0,15 bis +0,15 x $10^{-6}$/K, besonders bevorzugt im Bereich zwischen -0,05 bis 0,1 x $10^{-6}$/K.

Die Knoop-Härte einer Scheibe (a) wird entsprechend DIN ISO 9385, Ausgabe: 1991-01, bestimmt. Der Eindruck des Knoop-Diamanten wird mit einer Belastung von 0,1 N für 20 s vorgenommen. Die Knoop-Härte der erfindungsgemäßen Glaskeramikscheibe beträgt $HK_{0,1/20} \geq 500$, bevorzugt $HK_{0,1/20} \geq 550$, besonders bevorzugt $HK_{0,1/20} \geq 580$.

Es ist generell bekannt, dass sich Gläser aus dem System $Li_2O$-$Al_2O_3$-$SiO_2$ in Glaskeramiken mit Hochquarz-Mischkristallen als Hauptkristallphase umwandeln lassen. Dazu wird in der Regel wie folgend vorgegangen: Geeignete Rohmaterialien werden in einer geeigneten Zusammensetzung geschmolzen, geläutert, homogenisiert und dann zu einem Glasrohling, bzw. Grünkörper heiß geformt, beispielsweise durch Walzen, Gießen, Pressen oder neuerdings durch Floaten. Unter dem "Grünkörper" einer Glaskeramik wird ein aus einer geeigneten Zusammensetzung geschmolzener glasiger Körper verstanden, welcher durch Behandeln mit einem geeigneten Temperaturprogramm in eine Glaskeramik überführt werden kann.

Nach dem Abkühlen und Tempern des erschmolzenen Grünkörpers folgt eine Temperaturbehandlung, bei welcher das Glas durch kontrollierte Volumenkristallisation in eine Glaskeramik umgewandelt wird. Während dieser Temperaturbehandlung bilden sich in einem ersten Umwandlungsschritt ("Keimbildnerausscheidung") Kristallisationskeime eigener oder fremder Art in Glas. Unter Kristallisationskeimen bzw. Kristallkeimen werden submikroskopische kristalline Aggregate einer charakteristischen Größe verstanden. In einem zweiten Umwandlungsschritt ("Kristallisation") gegebenenfalls bei einer etwas höheren Temperatur, wachsen an den Kristallkeimen Kristall bzw. Kristallite. Die erfindungsgemäße Glaskeramik wird vorzugsweise nach dem folgenden Keramisierungsprogramm hergestellt:

- Aufheizen auf eine Temperatur von 750°C ± 20°C und Halten für 20 Minuten ± 15 Minuten,
- weiteres Aufheizen zwecks Keramisierung auf eine Temperatur von 900°C ± 20°C und Halten für 20 Minuten ± 15 Minuten und anschließend Abkühlen auf Raumtemperatur.

Das Abkühlen auf Raumtemperatur erfordert kein bestimmtes Temperaturprogramm. Es erfolgt in der Regel durch Verbringen der heißen Scheiben in die Raumluft. Dabei ergeben sich in der Regel Abkühlungzeiten zwischen -10 K/min und < -100 K/min.

Die vorstehend beschriebene transparente Scheibe (a) aus Glaskeramik eignet sich zur Herstellung von Scheibenlaminaten, die eine hohe Beschusssicherheit und eine hohe Transparenz für sichtbares und Infrarotlicht im Wellenlängenbereich zwischen 380 und 1100 nm aufweisen.

Das erfindungsgemäße transparente Scheibenlaminat weist insbesondere eine hohe Beschusssicherheit und eine hohe optische Transmission auf.

Das erfindungsgemäße Scheibenlaminat umfasst wenigstens eine transparente Glaskeramikscheibe (a), wie vorstehend beschrieben, gegebenenfalls wenigstens eine Scheibe (b) ausgewählt aus der Gruppe bestehend aus Scheiben aus Borosilikatglas, Kalk-Natron-Glas und Alumosilicatglas, die auch chemisch oder thermisch vorgespannt sein können, und wenigstens eine Scheibe (c) ausgewählt aus der Gruppe bestehend aus Scheiben aus Polycarbonat, Polyacryl, insbesondere Polymethylmethacrylat, Celluloseacetatbutyrat, Nylon, Polyolefin, Polyester, Polyurethan und Mischungen daraus.

Das erfindungsgemäße Scheibenlaminat zeigt nach der deutschen Industrienorm DIN 52290 Teil 3 (06/1984) eine durchbruchhemmende und/oder nach der europäischen Industrienorm DIN EN 1063 (01/2000) und/oder nach der deutschen Industrienorm DIN 52290 Teil 2 (11/1988) eine durchschusshemmende Wirkung. Ebenfalls gewährleistet das erfindungsgemäße Scheibenlaminat Beschusssicherheit, die den Anforderungen des NATO-Standardization-Agreement, STANAG 4569, Level 2 und 3, entspricht.

Vorzugsweise besteht die Scheibe (c) aus transparentem Polycarbonat (PC), Polymethylmethacrylat (PMMA) oder Polyurethan (PU).

Die Anzahl der Scheiben im transparenten Scheibenlaminat ist nur durch die bestehenden Anforderungen an eine hohe Transmission begrenzt. Vorzugsweise beträgt die Anzahl der Scheiben (a), (b) und (c) 2 bis 10, besonders bevorzugt 3 bis 9, ganz besonders bevorzugt 4 bis 8.

Vorzugsweise ist eine Scheibe (a) nach außen orientiert, bzw. am weitesten vom zu schützenden Objekt entfernt. Das bedeutet beispielsweise für eine Panzerverglasung, dass die Scheibe (a), die erste Scheibe ist, die äußeren Einflüssen Stand halten muss. Vorzugsweise ist die Scheibe (c) am nächsten zum zu schützenden Objekt orientiert. Für den Fall einer Panzerverglasung bedeutet dies, dass die Scheibe (c) die Scheibe ist, die den Innenraum eines Fahrzeugs auskleidet.

Bevorzugt ist eine Scheibenanordnung, jeweils von außen (am weitesten vom zu schützenden Objekt entfernt) nach innen (dem zu schützenden Objekt am nächsten), mit folgender Scheibenfolge

8-Scheiben-Laminat

(a)-(a)-(a)-(a)-(a)-(a)-(a)-(c)
(b)-(b)-(a)-(a)-(b)-(b)-(a)-(c)
(a)-(a)-(a)-(b)-(b)-(b)-(b)-(c)
(a)-(a)-(b)-(b)-(a)-(a)-(a)-(c)
(a)-(a)-(b)-(b)-(a)-(a)-(b)-(c)

7-Scheiben-Laminat

(a)-(a)-(a)-(b)-(b)-(b)-(c)
(b)-(b)-(b)-(a)-(a)-(b)-(c)

(a)-(a)-(b)-(a)-(b)-(b)-(c)

5-Scheiben-Laminat

(a)-(a)-(b)-(b)-(a)-(c)
(a)-(a)-(a)-(b)-(b)-(c)
(a)-(b)-(a)-(b)-(b)-(c)

Die Dicke der Scheibe (b) liegt im Bereich zwischen 3 und 20 mm, bevorzugt im Bereich zwischen 5 und 15 mm, besonders bevorzugt im Bereich zwischen 5 und 10 mm. Die Dicke der Scheibe (c) liegt im Bereich zwischen 3 und 15 mm, bevorzugt im Bereich zwischen 5 und 15 mm, besonders bevorzugt im Bereich zwischen 8 und 13 mm. Die Dicke der Scheibe (a) im Scheibenlaminat liegt im Bereich zwischen 2 und 20 mm, bevorzugt im Bereich von 4 bis 15 mm, besonders bevorzugt im Bereich zwischen 6 und 12 mm.

Vorzugsweise liegt die Dicke des Scheibenlaminats im Bereich zwischen 30 bis 100 mm, besonders bevorzugt im Bereich zwischen 40 bis 80 mm, ganz besonders bevorzugt im Bereich zwischen 60 und 80 mm.

Vorzugsweise werden die Scheiben (a)-(a), (a)-(b) und (b)-(b) jeweils unabhängig voneinander mit einem Haftvermittler ausgewählt aus der Gruppe bestehend aus Gießharzen oder Reaktionsharzen auf der Basis von Polyurethanen, Polyvinylbutyral (PVB), vernetzten Polyurethanen, teilvernetzten Polyurethanen, Polyharnstoffen, Epoxiden, ungesättigten oder gesättigten Polyestern, Polybutylenterephthalaten (PBT), Poly-(meth)-acrylaten, Silikonen, Silikonharzpolymeren, oder aus der Gruppe der Hotmelt-Klebstoffe, - Beschichtungen und -Dichtungsmassen, ausgewählt aus der Gruppe bestehend aus Hotmelt-Klebstoffen auf der Basis von Polyethylen oder dessen Copolymeren, insbesondere Ethylenvinylacetat (EVA), oder Polyvinylacetat oder aus Mischungen hiervon verbunden. Besonders bevorzugt werden die Scheiben (a)-(a), (a)-(b) und (b)-(b) jeweils unabhängig voneinander mit einem Haftvermittler ausgewählt aus der Gruppe bestehend aus Gießharzen oder Reaktionsharzen auf der Basis von Polyurethanen, Polyvinylbutyral und Hotmelt-Klebstoffen auf der Basis von Ethylenvinylacetat verbunden. Ganz besonders bevorzugt werden die Scheiben (a)-(a), (a)-(b) und (b)-(b) mit Polyvinylbutyral oder Polyurethan in Form einer Folie verbunden.

Vorzugsweise werden die Scheiben (a)-(c), (b)-(c) und (c)-(c) jeweils unabhängig voneinander mit einem Haftvermittler ausgewählt aus der Gruppe bestehend aus Gießharzen oder Reaktionsharzen auf der Basis von Polyurethanen, Polyvinylbutyral (PVB), vernetzten Polyurethanen, teilvernetzten Polyurethanen, Polyharnstoffen, Epoxiden, ungesättigten oder gesättigten Polyestern, Polyethylenterephthalaten (PET), Polybutylenterephthalaten (PBT), Poly-(meth)-acrylaten, Silikonen, Silikonharzpolymeren, oder aus der Gruppe der Hotmelt-Klebstoffe, -Beschichtungen und -Dichtungsmassen, ausgewählt aus der Gruppe bestehend aus Hotmelt-Klebstoffen auf der Basis von Polyethylen oder dessen Copolymeren, insbesondere Ethylenvinylacetat (EVA), oder Polyvinylacetat oder aus Mischungen hiervon verbunden. Besonders bevorzugt werden die Scheiben (a)-(c), (b)-(c) und (c)-(c) jeweils unabhängig voneinander mit einem Haftvermittler ausgewählt aus der Gruppe bestehend aus Gießharzen oder Reaktionsharzen auf der Basis von Polyurethanen, Polyvinylbutyral und Hotmelt-Klebstoffen auf der Basis von Ethylenvinylacetat verbunden. Ganz besonders bevorzugt werden die Scheiben (a)-(c), (b)-(c) und (c)-(c) mit Polyvinylbutyral in Form einer Folie verbunden.

Durch die Verwendung der transparenten Scheibe (a) weist ein transparentes Scheibenlaminat gemäß der vorliegenden Erfindung ein niedrigeres Flächengewicht auf, als entsprechende transparente Scheibenlaminate, die herkömmliche Gläser oder Glaskeramiken enthalten. Vorzugsweise liegt das Flächengewicht des Scheibenlaminats im Bereich zwischen 50 und 150 kg/m$^2$, besonders bevorzugt im Bereich zwischen 50 und 120 kg/m$^2$, und ganz besonders bevorzugt im Bereich zwischen 50 und 100 kg/m$^2$ und erfüllt die Anforderung der "NATO AEP-55 STANAG 4569 - Level II der III" bzw. stoppt z.B.:

mit 695 m/s auftreffende Hartkerngeschosse des Typs 7.62 x 39 API BZ,
mit 930 m/s auftreffende Geschosse mit Wolframcarbidkern des Typs 7.62 x 51 AP
oder mit 854 m/s auftreffende Hartkerngeschosse des Typs 7.62 x 54R B32 API.

Die Dicke der Schichten aus Haftvermittler liegt vorzugsweise im Bereich zwischen 0,05 bis 2 mm, besonders bevorzugt im Bereich zwischen 0,1 bis 1 mm, ganz besonders bevorzugt im Bereich zwischen 0,2 bis 0,8 mm.

Ein Verfahren zur Herstellung des Scheibenlaminats umfasst in an sich bekannter Weise die Schritte

- Zuschnitt der Scheiben (a), (b) und (c),
- Reinigung der Scheiben (a), (b) und (c)
- Stapeln und Einbringen eines Haftvermittlers in die Zwischenräume zwischen den einzelnen Scheiben (a), (b) und (c),
- Ggf. thermische Behandlung des Stapels zur Aktivierung des Haftvermittlers ggf. unter Vakuum oder unter Anwendung erhöhten Druckes auf den Stapel,
- Abkühlen des Laminates.

Ein entsprechendes Verfahren zur Herstellung eines Laminates ist zum Beispiel in der US 2008-187721 AA (ISOCLIMA GmbH) oder der EP 0 331 648 beschrieben.

Durch die erfindungsgemäße Möglichkeit des Einsatzes von wenigen und gegebenenfalls dünnen Glaskeramikscheiben (a) werden die Transmissionseigenschaften des erfindungsgemäßen Scheibenlaminats erheblich verbessert. Ebenfalls verfügen die erfindungsgemäßen Scheibenlaminate über eine hervorragende Farbneutralität aufgrund der Verwendung von Glaskeramikscheiben, die im Vergleich zum Stand der Technik dünner sein können.

Ein weiterer Gegenstand der vorliegenden Erfindung ist die Verwendung einer erfindungsgemäßen Glaskeramikscheibe, bzw. die Verwendung eines erfindungsgemäßen Scheibenlaminats, wie jeweils vorstehend beschrieben, als Teil einer Panzerverglasung oder als Teil einer schusssicheren Weste.

Die erfindungsgemäße Panzerverglasung ermöglicht eine maximale Energieabsorption beim Auftreten eines Geschosses. Dieser Splitterschützaufbau dient bevorzugt dazu, die Insassen eines mit entsprechender Panzerverglasung versehenen Fahrzeugs oder Gebäudes von herumfliegenden Glassplittern, hervorgerufen durch eine beschussbelastete Scheibe, zu schützen.

Beschreibung der Figuren

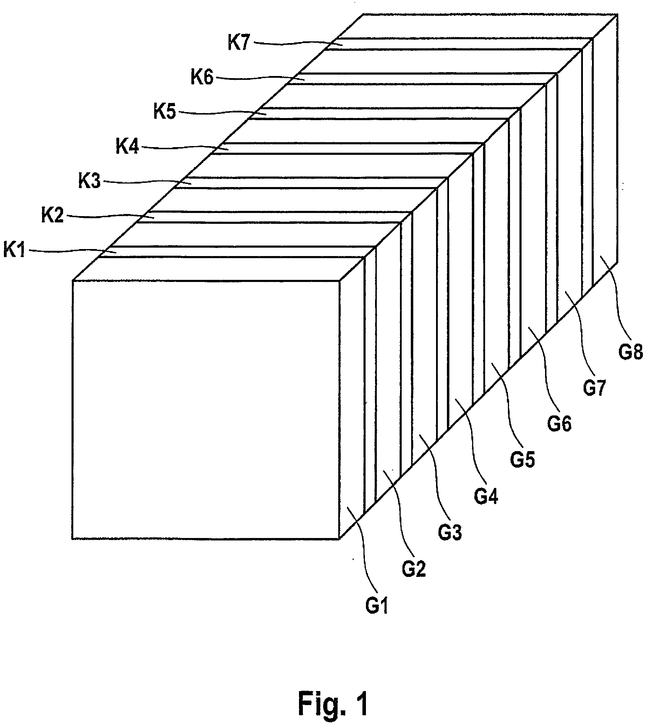

Fig.1 Darstellung eines erfindungsgemäßen Scheibenlaminats.

G1 bis G8 entsprechen jeweils Scheiben aus Glas, Glaskeramik oder Kunststoff, K1 bis K7 entsprechen jeweils Haftvermittlerschichten auf der Basis eines Kunststoffes, insbesondere Folien aus Polyvinylbutyral oder Polyurethan, die heute in der Regel für die Herstellung von Verbundglas zur Anwendung kommen.

Beispiele

Es wurden vier verschiedene Glaskeramiken unterschiedlicher Zusammensetzung hergestellt (Angaben in Gew.-% auf Oxidbasis), ferner wurde der Helligkeitswert $Y_{A/2°}$ bei einer Glasdicke von 4 mm sowie der lineare thermischen Ausdehnungskoeffizient (CTE) für den Bereich von 30 bis 70 °C angegeben.

Zur Herstellung der Glaskeramiken wurde zunächst auf übliche Weise ein Grünglas der entsprechenden Zusammensetzung hergestellt, aus dem Glasscheiben der gewünschten Dicke erzeugt wurden. Anschließend wurden die Glasscheiben in an sich bekannter Weise zu Glaskeramikscheiben keramisiert, wobei bei einer Temperatur von 750°C und einer Verweilzeit von 20 Minuten die Keimbildner in dem Glas erzeugt wurden. Danach wurde das Glas auf die Kristallisationstemperatur von 830°C erhitzt. Die Kristallisation wurde im Temperaturbereich vom 830°C bis 900°C vorgenommen, wobei die Temperatur ab 830°C mit einer Temperatursteigerungsrate von 10 K·min$^{-1}$ auf 900°C erhöht wurde, mit einer Verweildauer von 10 Minuten bei 900°C.

Für die Bestimmung des Helligkeitswertes $Y_{A/2°}$ wurde zunächst die wellenlängenabhängige Transmission $\tau(\lambda)$ einer 4 mm dicken Probe der Glaskeramik gemessen und auf Normlicht A normiert:

$$I(\lambda) = \tau(\lambda) \cdot f_A(\lambda)(\lambda = 350...800nm)$$

Anschließend erfolgte die Berechnung von Y unter Zuhilfenahme der CIE-definierten Augenempfindlichkeitskurven $\overline{y}(\lambda)$ (Commission internationale de l'Eclairage proceedings, 1931. Cambridge University Press, Cambridge bzw. DIN 5031):

$$Y = \int_{\lambda=380nm}^{\lambda=800nm} I(\lambda)\overline{y}(\lambda)d\lambda$$

Die Bestimmung des linearen thermischen Ausdehnungskoeffizienten CTE erfolgte entsprechend DIN ISO 7991 mit einem Termal Dilatometric Analyzer Harrop Modell TD 710 im Temperaturbereich 30...700 °C.

Zusammensetzungen, Helligkeitswerte und die Ausdehnungskoeffizienten sind in Tabelle 1 zusammen gefasst.

| | 1 | 2 | 3 | 4 |
|---|---|---|---|---|
| $Al_2O_3$ | 21,96 | 21,70 | 21,50 | 21,67 |

(fortgesetzt)

|  | 1 | 2 | 3 | 4 |
|---|---|---|---|---|
| $As_2O_3$ | 0,35 | 0,31 | 0,31 | 0,85 |
| BaO | 2,00 | 1,99 | 1,94 | 1,97 |
| $Fe_2O_3$ | 0,0050 | 0,0110 | 0,0120 | 0,0130 |
| $Li_2O$ | 3,78 | 3,76 | 3,66 | 3,72 |
| MgO | 0,60 | 0,58 | 0,58 | 0,58 |
| $Na_2O$ | 0,55 | 0,53 | 0,52 | 0,52 |
| $SiO_2$ | 65,04 | 65,50 | 65,80 | 64,96 |
| $TiO_2$ | 2,27 | 2,11 | 2,29 | 2,29 |
| ZnO | 1,70 | 1,68 | 1,64 | 1,67 |
| ZnO | 1,70 | 1,68 | 1,64 | 1,67 |
| $ZrO_2$ | 1,73 | 1,80 | 1,76 | 1,77 |
| $SnO_2$ | < 0,01 | < 0,01 | < 0,01 | < 0,01 |
| Y(A/2°); 4mm | 89,7 | 89,5 | 89,3 | 89,7 |
| CTE (30...700°C) | -0,08 | -0,11 | -0,1 | -0,1 |

Eine Glaskeramik gemäß Beispiel 4 wurde in ein Scheibenlaminat eingebaut. Die Herstellung des Scheibenlaminats erfolgte nach den üblichen Laminierverfahren an verschiedenen Glas- und Glaskeramikscheiben unter Zwischenschaltung von jeweils einer PVB-Folie nach dem von dem Hersteller der PVB-Folie (Butacite® Clear, Hersteller DuPont) empfohlen Prozessparametern in einem Autoklaven.

Es wurden 11 Scheibenlaminate mit jeweils verschiedenem Aufbau hergestellt, die in der Tabelle 2 zusammengefasst sind.

| Bei-spiel | G1 | K1 | G2 | K2 | G3 | K3 | G4 | K4 | G5 | K5 | G6 | K6 | G7 | K7 | G8 | Dicke mm | Flächen-gewicht kg/m² | Y(A/2°) | antiball. Limit m/s |
|---|---|---|---|---|---|---|---|---|---|---|---|---|---|---|---|---|---|---|---|
| 6b | 2 4 mm | 7 | 2 10 mm | 7 | 2 10 mm | 7 | 2 10 mm | 7 | 2 10 mm | 7 | 2 10 mm | 7 | 2 10 mm | 7 | 6 12 mm | 78,66 | 158 | 52,35 | 820 |
| 6a | 2 4 mm | 7 | 2 10 mm | 7 | 1 8 mm | 7 | 1 8 mm | 7 | 2 10 mm | 7 | 1 8 mm | 7 | 1 8 mm | 7 | 6 12 mm | 70,66 | 151,5 | 51,2 | 830 |
| 6 | 2 4 mm | 7 | 1 8 mm | 7 | 1 8 mm | 7 | 1 8 mm | 7 | 1 8 mm | 7 | 1 8 mm | 7 | 1 8 mm | 7 | 6 12 mm | 66,66 | 144 | 50,72 | 850 |
| 5 | 1 3 mm | 7 | 1 8 mm | 7 | 1 8 mm | 7 | 1 8 mm | 7 | 1 8 mm | 7 | 1 8 mm | 7 | 1 8 mm | 7 | 6 12 mm | 65,66 | 147 | 49,84 | 860 |
| 4a | 1 3 mm | 7 | 1 8 mm | 7 | 1 8 mm | 7 | 2 10 mm | 7 | 2 10 mm | 7 | 2 10 mm | 7 | 6 12 mm |  |  | 63,28 | 131 | 53,9 | 760 |
| 4 | 1 3 mm | 7 | 1 8 mm | 7 | 1 8 mm | 7 | 1 8 mm | 7 | 1 8 mm | 7 | 6 12 mm |  |  |  |  | 57,28 | 126 | 53,11 | 780 |
| 3a | 1 3 mm | 7 | 1 8 mm | 7 | 2 10 mm | 7 | 2 10 mm | 7 | 6 12 mm |  |  |  |  |  |  | 52,9 | 109 | 57,17 | 620 |
| 3 | 1 3 mm | 7 | 1 8 mm | 7 | 1 8 mm | 7 | 1 8 mm | 7 | 6 12 mm |  |  |  |  |  |  | 48,9 | 105,5 | 56,6 | 630 |
| 2a | 1 3 mm | 7 | 1 8 mm | 7 | 1 8 mm | 7 | 2 10 mm | 7 | 6 12 mm |  |  |  |  |  |  | 44,52 | 88 | 60,96 | 520 |
| 2 | 1 3mm | 7 | 1 8 mm | 7 | 2 10 mm | 7 | 1 8 mm | 7 | 6 12 mm |  |  |  |  |  |  | 40,52 | 85 | 60,33 | 520 |
| 1 | 5 8mm | 7 | 5 8 mm | 7 | 5 8mm | 7 | 5 8 mm | 7 | 6 12 mm |  |  |  |  |  |  | 45,52 | 97,5 | 49,4 | 600 |

Tabelle 2

In Tabelle 2 bedeuten G1 bis G8 die geschosshemmenden Schichten und K1 bis K7 die Schichten aus Laminierfolie. Die Bestandteile der einzelnen Schichten sind beziffert und soweit erforderlich ist ihre Dicke in mm angegeben. Die Bezifferung der einzelnen Schichten hat folgende Bedeutung:

1: Glaskeramikscheibe (a) gemäß Beispiel 4, Tabelle 1
2: Gefloatetes Borosilikatglas mit einem Ausdehnungskoeffizienten $CTE_{30...300}$ von $3,3 \cdot 10^{-6}K^{-1}$ (Borofloat® 33, Schott AG, Zusammensetzung in Gew.-% etwa 81 $SiO_2$, 13 $B_2O_3$, 4$Na_2O$ + $K_2O$, 2 $Al_2O_3$)
5: Glaskeramikscheibe gemäß Stand der Technik (EP 1 837 312, Beispiel 3, Zusammensetzung gerundet in Gew.-% 65,3 $SiO_2$, 21,8 $Al_2O_3$, 3,7 $Li_2O$, 2,3 $TiO_2$, 2 BaO, 1,7 ZnO, 1,8 $ZrO_2$, 0,6 MgO, 0,5 $Na_2O$, 0,3 $As_2O_3$, 0,1 $Nd_2O_3$)
6: Handelsübliches schlagzähes Polymethylenmethacrylat (Plexiglas Resist®, Evonic Industries, US 5,726,245 A)
7: Polyvinylbutyral-Folie, Dicke 0,38 mm (Butacite® Clear, DuPont)

Zur Ermittlung des Flächengewichtes kg · m$^{-2}$ wurde eine Scheibe im Format 50 x 50 cm$^2$ gewogen und das Ergebnis auf 1 m$^2$ umgerechnet. Das antiballistische Limit in m · s$^{-1}$ wurde mit einem Geschoss vom Kaliber 7,62 mm mit einem Gewicht von 10 g und Stahlkern ermittelt. Unterschiedliche Geschoss-Geschwindigkeiten werden durch unterschiedlich große Treibladungen erzielt. Zur Ermittlung des antiballistischen Limits werden in bekannter Weise die Testlaminate mit Projektilen unterschiedlicher Geschwindigkeit beschossen und anhand des Trefferbildes für die unterschiedlichen Geschwindigkeiten dann das antiballistische Limit ermittelt.

Die vorstehend genannte Tabelle macht deutlich, dass Scheibenlaminate mit der Glaskeramikscheibe (a) im Vergleich zu Scheibenlaminaten einer anderen Zusammensetzung, aber mit einem vergleichbaren ballistischen Limit, ein geringeres Flächengewicht aufweisen.

## Patentansprüche

1. Transparentes Scheibenlaminat, umfassend

   - wenigstens eine transparente Scheibe (a) aus Lithium-Glaskeramik mit einer Dicke im Bereich zwischen 2 und 20 mm und einer Zusammensetzung, die in Gew.-% bezogen auf die Gesamtzusammensetzung als Bestandteil enthält

   | | |
   |---|---|
   | $Li_2O$ | 3,0 - 4,5 |
   | $Al_2O_3$ | 18,0 - 24,0 |
   | $SiO_2$ | 55,0 - 70,0 |
   | $TiO_2$ | 0,01 - 2,3 |
   | $ZrO_2$ | 0,01 - 2,0 |
   | $\Sigma TiO_2 + ZrO_2$ | 0,5 - 4,3 |
   | $SnO_2$ | 0 - 0,2 |
   | MgO | 0 - 0,8 |
   | $Fe_2O_3$ | 40 - 200 ppm und |
   | $As_2O_3$ | 0,3 - 0,9 Gew.-% als chemisches Läutermittel. |

   - gegebenenfalls wenigstens eine Scheibe (b) ausgewählt aus der Gruppe bestehend aus Borosilikatglas, Kalk-Natron-Glas, Alumosilikatglas oder chemisch oder thermisch vorgespanntem Borosilikatglas, Alumosilikatglas oder Kalk-Natron-Glas mit einer Dicke im Bereich von 3 bis 20 mm
   - und wenigstens einer Scheibe (c) ausgewählt aus der Gruppe bestehend aus Scheiben aus Polycarbonat, Polyacryl, insbesondere Polymethylmethacrylat, Celluloseacetatbutyrat, Nylon, Polyolefin, Polyester, Polyurethan und Mischungen daraus mit einer Dicke im Bereich von 3 bis 15 mm.

2. Transparentes Scheibenlaminat nach Anspruch 1, **dadurch gekennzeichnet, dass** die Scheibe (a) 40 bis 130 ppm $Fe_2O_3$ enthält.

3. Transparentes Scheibenlaminat nach Anspruch 1 oder 2, **dadurch gekennzeichnet, dass** die Scheibe (a) als weitere Bestandteile

   | | |
   |---|---|
   | BaO | 0 - 3 |
   | $Na_2O$ | 0 - 1,5 |
   | ZnO | 0 - 2,5 |

   jeweils in Gew.-% bezogen auf die Gesamtzusammensetzung, enthält.

4. Transparentes Scheibenlaminat nach einem oder mehreren der Ansprüche 1 bis 3, **dadurch gekennzeichnet, dass** die Dicke der Scheibe (a) im Bereich zwischen 4 bis 15 mm, bevorzugt im Bereich zwischen 6 und 12 mm liegt.

5. Transparentes Scheibenlaminat nach einem oder mehreren der Ansprüche 1 bis 4, **dadurch gekennzeichnet, dass** der thermische Ausdehnungskoeffizient (CTE) der Scheibe (a) im Bereich zwischen 30 bis 700°C im Bereich zwischen -0,15 + 0,15 x 10$^{-6}$/K, bevorzugt im Bereich zwischen - 0,05 bis -0,12 x 10$^{-6}$/K, besonders bevorzugt im Bereich zwischen -0,05 bis -0,1 x 10$^{-6}$/K, liegt.

**6.** Transparentes Scheibenlaminat nach einem oder mehreren der Ansprüche 1 bis 5, **dadurch gekennzeichnet, dass** die Scheibe (a) einen Helligkeitswert für transmittierendes Normlicht unter 2°-Beobachtung $Y_{A/2°}$ bei einer Dicke der Scheibe von 4 mm von $\geq$ 80, bevorzugt $\geq$ 85 besonders bevorzugt $\geq$ 89 besitzt.

**7.** Transparentes Scheibenlaminat nach einem oder mehreren der Ansprüche 1 bis 3, **dadurch gekennzeichnet, dass** die Dicke der Scheibe (b) im Bereich zwischen 5 und 15 mm, bevorzugt im Bereich zwischen 5 und 10 mm, liegt.

**8.** Transparentes Scheibenlaminat nach einem oder mehreren der Ansprüche 1 bis 3, **dadurch gekennzeichnet, dass** die Dicke der Scheibe (c) im Bereich zwischen 5 und 15 mm, bevorzugt im Bereich zwischen 8 und 13 mm, liegt.

**9.** Transparentes Scheibenlaminat nach Anspruch 1, **dadurch gekennzeichnet, dass** die Anzahl der Scheiben (a), (b) und (c) 2 bis 10, bevorzugt 3 bis 9, besonders bevorzugt 4 bis 8, beträgt.

**10.** Transparentes Scheibenlaminat nach einem oder mehreren der Ansprüche 1 bis 9, **dadurch gekennzeichnet, dass** die Dicke des Scheibenlaminats im Bereich zwischen 30 bis 100 mm, bevorzugt im Bereich zwischen 40 bis 80 mm, liegt.

**11.** Transparentes Scheibenlaminat nach einem oder mehreren der Ansprüche 1 bis 10, **dadurch gekennzeichnet, dass** jeweils zwischen den Scheiben (a)-(a), (a)-(b), (b)-(b) und/oder den Scheiben (a)-(c), (b)-(c), (c)-(c) jeweils unabhängig voneinander ein Haftvermittler ausgewählt aus der Gruppe bestehend aus Gießharzen oder Reaktionsharzen auf der Basis von Polyurethanen, Polyvinylbutyral (PVB), vernetzten Polyurethanen, teilvernetzten Polyurethanen, Polyharnstoffen, Epoxiden, ungesättigten oder gesättigten Polyestern, Polybutylenterephthalaten (PBT), Poly-(meth)-acrylaten, Silikonen, Silikonharzpolymeren, oder aus der Gruppe der Hotmelt-Klebstoffe, -Beschichtungen und -Dichtungsmassen, ausgewählt aus der Gruppe bestehend aus Hotmelt-Klebstoffen auf der Basis von Polyethylen oder dessen Copolymeren, insbesondere Ethylenvinylacetat (EVA), oder Polyvinylacetat oder aus Mischungen hiervon vorliegt.

**12.** Transparentes Scheibenlaminat nach einem oder mehreren der Ansprüche 1 bis 11 **dadurch gekennzeichnet, dass** das Flächengewicht des Scheibenlaminats im Bereich zwischen 50 und 150 Kg/m$^2$, bevorzugt im Bereich von 50 und 120 kg/m$^2$ und besonders bevorzugt im Bereich zwischen 50 und 100 kg/m$^2$ liegt.

**13.** Verwendung eines transparenten Scheibenlaminats nach einem oder mehreren der Ansprüche 1 bis 12 als Teil einer Panzerverglasung oder als Teil einer schusssicheren Weste.

**Claims**

**1.** Transparent plate laminate, comprising

- at least one transparent plate (a) of lithium glass ceramic having a thickness in the range from 2 to 20 mm and a composition containing, expressed in wt. % based on the total composition

- $Li_2O$      3,0 - 4,5
- $Al_2O_3$      18,0 - 24,0
- $SiO_2$      55,0 - 70,0
- $TiO_2$      0,01 - 2,3
- $ZrO_2$      0,01 - 2,0
- $\Sigma TiO_2 + ZrO_2$      0,5 - 4,3
- $SnO_2$      0 - 0,2
- $MgO$      0 - 0,8
- $Fe_2O_3$      40 - 200 ppm and
- $As_2O_3$      0,3 - 0,9 wt.-% as chemical refining agent.

- optionally at least a plate (b) selected from the group consisting of borosilicate glass, soda lime glass, aluminosilicate glass or chemically or thermally prestressed borosilicate glass, aluminosilicate glass or soda lime glass, the plate (b) having a thickness in the range from 3 to 20 mm, and
- at least one plate (c) selected from the group consisting of polycarbonate, polyacrylate, particularly poly(methyl methacrylate), cellulose acetate butyrate, nylon, polyolefin, polyester, polyurethane and mixtures thereof, the plate (c) having a thickness in the range from 3 to 15 mm.

2. Transparent plate laminate according to claim 1,
**characterized in that** the plate (a) contains from 40 to 130 ppm of $Fe_2O_3$.

3. Transparent plate laminate according to claim 1 or 2,
**characterized in that** the plate (a) contains, expressed in wt. % based on the total composition

   - BaO      0 - 3
   - Na20      0 - 1,5
   - ZnO      0 - 2,5.

4. Transparent plate laminate according to one or more of the claims 1 to 3, **characterized in that** the thickness of the plate (a) is in the range from 4 to 15 mm, preferably in the range from 6 to 12 mm.

5. Transparent plate according to one or more of claims 1 to 4, **characterized by** the fact that between 30 and 700° C the thermal expansion coefficient (CTE) ranges from -0.15 to +0.15 x 10-61K, preferably from -0.05 to -0.12 x 10-6/wand more preferably from -0.05 to -0.1 x 10-6/K.

6. Transparent plate according to one or more of claims 1 to 3, **characterized in that** plate (a) has a brightness value for transmitted normal light observed at an angle of 2°, YA/2°, for a plate thickness of 4 mm of $\geq 80$, preferably $\geq 85$ and more preferably $\geq 89$.

7. Transparent plate laminate according to one or more of the claims 1 to 3,
**characterized in that** the thickness of the plate (b) is in the range from 5 to 15 mm and preferably in the range from 5 to 10 mm.

8. Transparent plate laminate according to one or more of the claims 1 to 3,
**characterized in that** the thickness of the plate (c) is in the range from 5 to 15 mm, preferably in the range from 8 to 13 mm.

9. Transparent plate laminate according to claim 1,
**characterized in that** the number of plates (a), (b) and (c) is 2 to 10, preferably 3 to 9 and most preferably 4 to 8.

10. Transparent plate laminate according to one or more of the claims 1 to 9, **characterized in that** the thickness of the plate laminate is in the range between 30 and 100 mm and preferably in the range between 40 and 80 mm.

11. Transparent plate laminate according to one or more of the claims 1 to 10, **characterized in that** between the plates (a)-(a), (a)-(b) and (b)-(b), and/or (a)-(c), (b)-(c), (c)-(c), independently of each other, a bonding agent is existent selected from the group consisting of casting resins or reactive resins based on polyurethanes, polyvinylbutyral (PVB), cross-linked polyurethanes, partly crosslinked polyurethanes, polyureas, epoxides, unsaturated or saturated polyesters, polybutylene terephthalates (PBT), poly(meth)acrylates, silicones, silicone resin polymers, or from the group of hot-melt adhesives, coatings or sealants selected from the group consisting of hot-melt adhesives based on polyethylene or copolymers thereof, particularly ethylene vinylacetate (EVA), or polyvinyl acetate or mixtures thereof.

12. Transparent plate laminate according to one or more of the claims 1 to 11, **characterized in that** the weight per unit area of the plate laminate is in the range between 50 and 150 kg/m$^2$, preferably in the range between 50 and 120 kg/m$^2$ and most preferably in the range between 50 and 100 kg/m$^2$.

13. Use of a transparent plate laminate according to one or more of the claims 1 to 12 as a part of as part of an armored glass or as part of a bullet-proof vest.

**Revendications**

1. Plaque stratifiée transparente, comprenant :

- au moins une plaque transparente (a) en vitrocéramique de lithium d'une épaisseur dans la plage comprise entre 2 et 20 mm et d'une composition qui contient, en % en poids par rapport à la composition totale, en tant que constituants :

| | |
|---|---|
| $Li_2O$ | 3,0 à 4,5 |
| $Al_2O_3$ | 18,0 à 24, 0 |
| $SiO_2$ | 55,0 à 70,0 |
| $TiO_2$ | 0,01 à 2,3 |
| $ZrO_2$ | 0,01 à 2,0 |
| $\Sigma TiO_2 + ZrO_2$ | 0,5 à 4,3 |
| $SnO_2$ | 0 à 0,2 |
| MgO | 0 à 0,8 |
| $Fe_2O_3$ | 40 à 200 ppm et |
| $As_2O_3$ | 0,3 à 0,9 % en poids en tant qu'agent d'affinage chimique, |

- éventuellement au moins une plaque (b) choisie dans le groupe constitué par le verre de borosilicate, le verre de silicate sodocalcique, le verre d'alumosilicate ; ou le verre de borosilicate, le verre d'alumosilicate ou le verre de silicate sodocalcique trempé chimiquement ou thermiquement, d'une épaisseur dans la plage allant de 3 à 20 mm,
- et au moins une plaque (c) choisie dans le groupe constitué par les plaques en polycarbonate, polyacrylique, notamment polyméthacrylate de méthyle, acétate-butyrate de cellulose, nylon, polyoléfine, polyester, polyuréthane et leurs mélanges, d'une épaisseur dans la plage allant de 3 à 15 mm.

2. Plaque stratifiée transparente selon la revendication 1, **caractérisée en ce que** la plaque (a) contient 40 à 130 ppm de $Fe_2O_3$.

3. Plaque stratifiée transparente selon la revendication 1 ou 2, **caractérisée en ce que** la plaque (a) contient en tant que constituants supplémentaires

| | |
|---|---|
| BaO | 0 à 3 |
| $Na_2O$ | 0 à 1,5 |
| ZnO | 0 à 2,5 |

à chaque fois en % en poids par rapport à la composition totale.

4. Plaque stratifiée transparente selon une ou plusieurs des revendications 1 à 3, **caractérisée en ce que** l'épaisseur de la plaque (a) se situe dans la plage allant de 4 à 15 mm, de préférence dans la plage comprise entre 6 et 12 mm.

5. Plaque stratifiée transparente selon une ou plusieurs des revendications 1 à 4, **caractérisée en ce que** le coefficient d'expansion thermique (CTE) de la plaque (a) dans la plage allant de 30 à 700 °C se situe dans la plage allant de -0,15 à +0,15 x $10^{-6}$/K, de préférence dans la plage allant de -0,05 à -0,12 x $10^{-6}$/K, de manière particulièrement préférée dans la plage allant de -0,05 à -0,1 x $10^{-6}$/K.

6. Plaque stratifiée transparente selon une ou plusieurs des revendications 1 à 5, **caractérisée en ce que** la plaque (a) présente un niveau de luminance pour une lumière normalisée en transmission à un angle d'observation $Y_{A/2°}$ de 2° et à une épaisseur de la plaque de 4 mm $\geq$ 80, de préférence $\geq$ 85, de manière particulièrement préférée $\geq$ 89.

7. Plaque stratifiée transparente selon une ou plusieurs des revendications 1 à 3, **caractérisée en ce que** l'épaisseur de la plaque (b) se situe dans la plage comprise entre 5 et 15 mm, de préférence dans la plage comprise entre 5 et 10 mm.

8. Plaque stratifiée transparente selon une ou plusieurs des revendications 1 à 3, **caractérisée en ce que** l'épaisseur de la plaque (c) se situe dans la plage comprise entre 5 et 15 mm, de préférence dans la plage comprise entre 8 et 13 mm.

9. Plaque stratifiée transparente selon la revendication 1, **caractérisée en ce que** le nombre de plaques (a), (b) et (c) est de 2 à 10, de préférence de 3 à 9, de manière particulièrement préférée de 4 à 8.

10. Plaque stratifiée transparente selon une ou plusieurs des revendications 1 à 9, **caractérisée en ce que** l'épaisseur de la plaque stratifiée se situe dans la plage allant de 30 à 100 mm, de préférence dans la plage allant de 40 à 80 mm.

11. Plaque stratifiée transparente selon une ou plusieurs des revendications 1 à 10, **caractérisée en ce qu'**un promoteur d'adhésion choisi dans le groupe constitué par les résines à couler ou les résines réactives à base de polyuréthanes, de polyvinylbutyral (PVB), de polyuréthanes réticulés, de polyuréthanes partiellement réticulés, de polyurées, d'époxydes, de polyesters insaturés ou saturés, de polybutylène téréphtalates (PBT), de poly(méth)acrylates, de silicones, de polymères de résines de silicone, ou dans le groupe des adhésifs, revêtements et matériaux d'étanchéité thermofusibles, choisis dans le groupe constitué par les adhésifs thermofusibles à base de polyéthylène ou ses copolymères, notamment l'éthylène-acétate de vinyle (EVA) ou le polyacétate de vinyle ou leurs mélanges, se trouve à chaque fois entre les plaques (a) - (a), (a) - (b), (b) - (b) et/ou entre les plaques (a) - (c), (b) - (c), (c) - (c), à chaque fois indépendamment les unes des autres.

12. Plaque stratifiée transparente selon une ou plusieurs des revendications 1 à 11, **caractérisée en ce que** le poids surfacique de la plaque stratifiée se situe dans la plage comprise entre 50 et 150 kg/m$^2$, de préférence dans la plage comprise entre 50 et 120 kg/m$^2$ et de manière particulièrement préférée dans la plage comprise entre 50 et 100 kg/m$^2$.

13. Utilisation d'une plaque stratifiée transparente selon une ou plusieurs des revendications 1 à 12 en tant que partie du vitrage d'un char d'assaut ou en tant que partie d'un gilet pare-balle.

K7
K6
K5
K4
K3
K2
K1

G1
G2
G3
G4
G5
G6
G7
G8

Fig. 1

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 1029830 A1
- EP 1837312 A1
- WO 03068501 A1
- EP 0390773 B1
- GB 2284655 A
- EP 0233732 A1
- US 2008187721 AA
- EP 0331648 A
- EP 1837312 A
- US 5726245 A

**In der Beschreibung aufgeführte Nicht-Patentliteratur**

- Commission internationale de l'Eclairage proceedings. Cambridge University Press, 1931